(19) Europäisches Patentamt
European Patent Office
Office européen des brevets

(11) **EP 3 654 246 B1**

(12) **EUROPEAN PATENT SPECIFICATION**

(45) Date of publication and mention of the grant of the patent:
**03.01.2024 Bulletin 2024/01**

(21) Application number: **18206154.9**

(22) Date of filing: **14.11.2018**

(51) International Patent Classification (IPC):
**G06N 3/04** *(2023.01)*   **G06N 3/08** *(2023.01)*

(52) Cooperative Patent Classification (CPC):
**G06N 3/088; G06N 3/045**

(54) **METHOD, VEHICLE, SYSTEM, AND STORAGE MEDIUM FOR INDICATING ANOMALOUS VEHICLE SCENARIO USING ENCODER NETWORK AND REPLAY BUFFER**

VERFAHREN, FAHRZEUG, SYSTEM UND SPEICHERMEDIUM ZUR ANZEIGE EINES ANORMALEN FAHRZEUGSZENARIOS UNTER VERWENDUNG EINES ENCODERNETZWERKS UND EINES WIEDERGABEPUFFERS

PROCÉDÉ, VÉHICULE, SYSTÈME ET SUPPORT D'INFORMATIONS POUR INDIQUER UN SCÉNARIO DE VÉHICULE ANORMALES UTILISANT UN RÉSEAU DE CODEURS ET UNE MÉMOIRE TAMPON DE RELECTURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.05.2020 Bulletin 2020/21**

(73) Proprietor: **Bayerische Motoren Werke Aktiengesellschaft
80809 München (DE)**

(72) Inventors:
• **Notz, Dominik
65843 Sulzbach (DE)**
• **Zhu, Yi
Elmhurst, New York 11373, (US)**

(56) References cited:
• **Fahrettin Gökgöz: "Anomaly Detection using GANs in OpenSky Network", , May 2018 (2018-05), XP055588120, https://opensky-network.org/community/publications Retrieved from the Internet: URL:https://www.sto.nato.int/publications/STO%20Meeting%20Proceedings/STO-MP-IST-1 60 /MP-IST-160-W2-2.pdf [retrieved on 2019-05-13]**
• **Jonathan Hui: "GAN - Ways to improve GAN performance", , 19 June 2018 (2018-06-19), XP055588316, Retrieved from the Internet: URL:https://towardsdatascience.com/gan-way s-to-improve-gan-performance-acf37f9f59b [retrieved on 2019-05-14]**
• **Samet Akcay ET AL: "GANomaly: Semi-Supervised Anomaly Detection via Adversarial Training", , 13 November 2018 (2018-11-13), XP055587951, Retrieved from the Internet: URL:https://arxiv.org/pdf/1805.06725.pdf [retrieved on 2019-05-13]**
• **NAMAN PATEL ET AL: "Adversarial Learning-Based On-Line Anomaly Monitoring for Assured Autonomy", ARXIV.ORG, CORNELL UNIVERSITY LIBRARY, 201 OLIN LIBRARY CORNELL UNIVERSITY ITHACA, NY 14853, 12 November 2018 (2018-11-12), XP081048896,**

**Description**

The present application relates to a method for generating a signal indicating anomalous scenarios using an evaluation machine comprising a discriminator network, a generator network, and an encoder network, calibrated using a replay buffer.

US patent application publication US 2016/0272113 A1 relates to a monitoring system aimed at determining that a vehicle is not being operated by a driver. Based on the vehicle not being operated, the monitoring system can analyse data from one or more sensors of the vehicle to monitor a passenger compartment of the vehicle. With data from the one or more sensors, the monitoring system can detect an anomaly within the passenger compartment of the vehicle. Based, at least in part, on detecting the anomaly, the monitoring system can transmit a signal corresponding to an alert to a computing device of the driver, the alert indicating the anomaly.

Fahrettin Gökgöz et al. "Anomaly Detection using GANs in OpenSky Network", (2018-05) relates to using GANs for anomaly detection in flight surveillance data as a way of anticipating accidents. This document describes extending the objective function to learn an encoder as well (Bidirectional GAN). This allows for more efficient anomaly detection.

It is an objective of the present invention to improve the safety of vehicles operations. A further objective is to indicate a potential threat to the safety of vehicles operations. A further objective is to reduce the cost of vehicle manufacturing. A further objective is to reduce storage requirements for vehicle scenario information. A further objective is to improve the cautiousness of autonomous vehicle behaviour.

The objectives of the present invention are solved by the subject matter of the independent claims. Further aspects of the invention are outlined in the dependent claims.

The method may improve the safety of vehicles operations and indicate potential threats by generating a signal indicating anomalous scenarios. The method may also reduce the cost of vehicle manufacturing by generating a signal indicating anomalous scenarios and focus development resources on anomalous scenarios rather than on normal scenarios. The method may also improve the cautiousness of autonomous vehicle operation by removing from autonomous vehicle training scenarios, scenarios including vehicle controlled in an irregular way.

By storing a batch of noise signals and output signals of the generator network in a replay buffer, and receiving previous generator output signals and previous noise signals from the replay buffer, overfitting the discriminator network is decreased or prevented, resulting in an improved accuracy in the signal indicating an anomalous vehicle scenario, such as improved sensitivity and specificity. This reduces the misclassifications in the output signal.

By using random noise signals for training the evaluation machine, no prior manual classification of the input signal have to be made, allowing unsupervised calibration of the networks. This improves the efficiency of calibration, especially with large numbers of training signals, and allows automated calibration running in real-time, or almost real-time, with low latency. The noise signals may be generated by the noise generator.

One problem of the training discriminator generator, encoder networks is that the generator may over-fit to the current discriminator network and the discriminator may over-fit to the current generator network. The replay buffer may store noise signals and output signals of the generator network and provide previous generator output signals and previous noise signals. Current noise signals and output from current generator network may be mixed with previous generator output signals and previous noise signals for training discriminator network. The mix may be one to one so that equal amount of current signals and previous signals are used. The mix may also have any other ratio. The previous signals may be from calibrations steps occurring a previous execution of the calibration steps, it may be of earlier execution of the calibration steps. The replay buffer may also provide a mix of signals of several earlier executions of the calibration steps.

The calibration steps may be carried out iteratively a plurality of times and the discriminator, generator and encoder networks preferably updated during each iteration (such as towards the end of each iteration). The steps may further be repeated until the generator, encoder, and/or discriminator are sufficiently calibrated, e.g. anomalous scenarios are sufficiently detected. By repeating the calibration steps a plurality of timed, an indication of anomalous vehicle scenario may be signalled with improved sensitivity. During each calibration cycle, some of the newly generated images will be stored in the replay buffer. In each training cycle, the signals for the training of the discriminator will be a combination of newly generated signals and old ones from the replay buffer.

The output signal of the discriminator network indicates a confidence of the discriminator network to categorize (distinguish between) a first category of signals comprising sensor signals from vehicle sensors and output signals of the encoder network, and a second category of signals comprising noise signals and output signals of the generator network.

Updating the discriminator network may include affecting (increasing or decreasing) a networks loss value in a first direction (such as increasing and/or maximizing) by calibrating the discriminator network to increase its confidence in distinguishing the two categories. Updating the encoder network and the generator network may include affecting the networks loss value in a second direction (such as decreasing and/or minimizing the network loss value), by calibrating the encoder network and the generator network so that the confidence of the discriminator network to categorize (distinguish between) the first category of signals and the second category of signals is reduced.

The networks loss value (objective) may be generated via the function (value function V):

$$\min_{G,E} \max_{D} V(D, E, G)$$

where

$$V(D, E, G) := \mathbb{E}_{\mathbf{x} \sim p_{\mathbf{X}}} \Big[ \underbrace{\mathbb{E}_{\mathbf{z} \sim p_E(\cdot|\mathbf{x})} \big[ \log D(\mathbf{x}, \mathbf{z}) \big]}_{\log D(\mathbf{x}, E(\mathbf{x}))} \Big] + \mathbb{E}_{\mathbf{z} \sim p_{\mathbf{Z}}} \Big[ \underbrace{\mathbb{E}_{\mathbf{x} \sim p_G(\cdot|\mathbf{z})} \big[ \log \big(1 - D(\mathbf{x}, \mathbf{z})\big) \big]}_{\log(1 - D(G(\mathbf{z}), \mathbf{z}))} \Big]$$

The discriminator network indicates the confidence with a probability estimate, reaching from with a first value (such as one) when the discriminator network indicates an input signal of the discriminator as belonging to one of the first category and the second category, and to a second value (such as zero) when the discriminator network indicates another input signal to the discriminator as clearly belonging to a another of the first category and the second category. The networks loss value may be maximized when the discriminator network correctly categorizes the first category and the second category of signals with high confidence.

The first category may be (x,z) pair where x comes from real data and z is generated from the encoder network with input x. The second category may be (x,z) pair where z may be a random vector (such as a Gaussian random vector) and x may be generated from the generator network with input z.

The output signal of the discriminator network may indicate a value approaching a third value (such as one half) that the discriminator network substantially cannot categorize an input signal as belonging either to the first category, or the second category. An output from the discriminator approaching the third value may indicate a low confidence of the discriminator network in categorizing the input signal in either the first category or in the second category. A discriminator network output signal approaching the third value may minimize the networks loss value.

The calibrations steps may be carried out until a Nash equilibrium of the network loss value is essentially achieved at least locally. When the Nash equilibrium is essentially achieved, the generator network and the encoder network may be calibrated so that the discriminator network substantially cannot distinguish between the first category of signals and the second category of signals. The output signal of the discriminator network may approach the third value, such as one half.

Updating the discriminator network, the generator network, and the encoder network by affecting a networks loss value in a first and second directions respectively improves the evaluation machine's sensitivity to anomalous vehicle scenarios.

Affecting the networks loss value (in a first and/or second direction) may include taking a stochastic gradient decent/ascent step. The stochastic gradient decent/ascent step may further be determined by backpropagation of the discriminator network, the encoder network, and/or the generator network.

Using stochastic gradient decent/ascent and backpropagation improves the efficiency of the networks update and calibration in particular when the number of dimensions of the vehicle sensors data increases.

The stochastic gradient decent/ascent may be based on a subset of a complete set of training scenarios.

During updating of the networks during the calibration steps, the ratio between the first category of signals and the second category of signals may be between 1:4 and 4:1, more preferably between 1:2 and 2:1, more preferably between 4:5 and 5:4. The ratio may be close to 1:1. This ensures that the discriminator gives roughly the same weight to the two categories during training. The preferred ratios ensures optimal training conditions.

The ratio between previous generator output signals and output signals of the generator network may further during networks updating be between 1:4 and 4:1, more preferably between 1:2 and 2:1, more preferably between 4:5 and 5:4. It may be close to 1:1. Keeping the ratio between preferred intervals ensures that a balance between overfitting and giving too much weight to previous generator output signals.

Generate the anomaly score includes generating a reconstruction loss value and generating a discriminator score value. The reconstruction loss value and the discriminator score value are linearly weighted into the anomaly score.

The reconstruction loss may be given by the function:

$$L_G(x) = \| x - G(E(x)) \|_1$$

where x is sensor signals captured during a scenario under evaluation.

For typical (normal) sensor signals x, the reconstruction loss may be small, since both G and E have been trained on typical sensor signals. For anomalous sensor signals x, the reconstruction loss may be large, since neither G nor E have been trained on anomalous sensor signals.

Using the reconstruction loss (i.e. the amount of deformation of the original data, when encoded with the encoder network and "decoded" with the generator network) to calculate anomaly score further improves the accuracy of indicating anomalous vehicle scenario.

The discriminator score may be given by the function:

$$S_D(x) = -D(x, E(x))$$

where x is sensor signals captured during a scenario under evaluation.

The output of the discriminator score function may be close to -1 when the input "x" includes signals from the vehicle sensors during normal scenarios.

The output of the discriminator score function may be different from -1 (such as close to 0), when the input "x" includes signals from the vehicle sensors captured during anomalous scenario conditions.

The discriminator score may also be given by the cross entropy function:

$$S_D(x) = -\log(D(x, E(x)))$$

The discriminator score may then be close to 0 when the input signal "x" includes signals from the vehicle sensors during normal scenarios. The discriminator score may be significantly greater than 0 (such exceeding 1, preferably exceeding 10) when the input "x" includes signals from the vehicle sensors captured during anomalous scenario conditions.

Using the discriminator score (i.e. output of the discriminator network) to calculate anomaly score further improves the accuracy of indicating anomalous vehicle scenario.

In addition, by linearly weighting the reconstruction loss value and the discriminator score value into the anomaly score, both the discriminator network, generator network, and encoder network are used to assess the anomaly score. This achieves a more stable anomaly score.

The linearly weighted anomaly score may be given by the function:

$$S_A(x) = w\, L_G(x) + (1-w)\, S_D(x)$$

The anomaly score may be weighted using a geometric mean of the reconstruction loss and the discriminator score.

The discriminator network, the generator network, and/or the encoder network may be convolutional neural networks. The input to the convolutional neural network may then be a signal containing information of scenarios represented in two dimensions. The signal may contain information related to image data.

By configuring the discriminator network, the generator network, and/or the encoder network to be a convolutional neural network, spatial structure of input signals may be taken into account more efficiently, vastly reducing the number of network parameters, reducing storage and processing requirements.

The method further comprises: generating a request for driver take-over during closed-loop operation, filtering from vehicle training scenario data, scenario data associated with the signal indicating anomalous scenario acquired during open-loop operation, where anomalous scenario indicate irregular driver behaviour, wherein scenario data not associated with the signal indicating anomalous scenario is stored in a storage for vehicle training, and/or reducing a storage volume of a long time storage of vehicle training data, by filtering from the data storage, scenario data associated with the signal indicating anomalous scenario.

Using the invention, a vehicle controller may be able to distinguish between driving scenarios that the vehicle is able to handle autonomous, from driving scenarios that the vehicle potentially will not be able to handle autonomous in a safe manner. Generating an alert to the driver may make the driver observant on that the vehicle is entering into an environment that the vehicle may not be able to handle autonomous.

In a closed-loop operation (i.e. autonomous vehicle operation substantially without human direct interaction), this may involve requesting the driver to take over control of the vehicle. Alternatively, the vehicle may enter into a "safe mode" vehicle operation wherein vehicle velocity is decreased or wherein the vehicle is parked in a controlled manner. In an open-loop operation (i.e. vehicle operation involving human direct interaction) this may make the driver aware of a danger scenario that could affect the safe operation of the vehicle and prepare the driver to take responsive actions.

The method may also be performed on data collected from one or more previous driving occasions. The detections steps may be applied on such data to indicate a potential irregular driving behaviour. This allows scenarios from "bad" driving behaviour to be removed from driving data used to train the vehicle for autonomous driving.

Further, the method may be applied to remove redundant data in vehicle operation scenario database. Similar scenario data will generate low anomaly score, indicating that limited amount of additional information is contained needed to improve autonomous driving. Redundant scenario data may be removed from storage, such as long term storage.

The method may further comprise updating a controller of a vehicle in response to the signal indicating anomalous scenario. The signal indicating anomalous vehicle scenario indicates that vehicle controller may have to be amended in order to the vehicle to autonomous handle the indicated scenario in a safe manner in the future. Responsive to the single indicating anomalous vehicle scenario, the autonomous vehicle operation controller may be amended to include the operation of the anomalous scenario. Subsequently, the discriminator network, the generator network, and/or the encoder network may be updated according to the calibrations steps so that the previously anomalous scenario is subsequently considered a normal scenario. In this manner the controller may progressively be improved to safely handle more and more scenarios until human monitoring is substantially obsolete.

The evaluation machine is built into the vehicle for the detection steps to be performed in the vehicle. The vehicle may also be part of a system, wherein information regarding vehicle scenario is sent within the system and the signal indicating anomalous vehicle scenario may be performed outside the vehicle. A signal may be sent to the vehicle in order for the vehicle to take appropriate action on the anomalous scenario. An activator in the vehicle such as an indication light might make the passenger aware of anomalous scenario. Vehicle control may also be handed over to remote human operation in case of anomalous scenario.

The benefits and advantages of the aforementioned vehicle, storage medium and system are equal or similar to the advantages of the above-mentioned method.

In the following, embodiments of the invention are described with respect to the figures, wherein

Fig. 1    shows a schematic illustration of vehicle operation with data collection and feedback loop;

Fig. 2    illustrates the structure of networks calibration with bidirectional generative networks and data batch with replay buffer;

Fig. 3A    illustrates detection of anomalous sensor data, driver alert and takeover request;

Fig. 3B    illustrates detection of anomalous sensor data and irregular driver behaviour filtering; and

Fig. 3C    illustrates detection of anomalous sensor data and reducing data volume by data deletion.

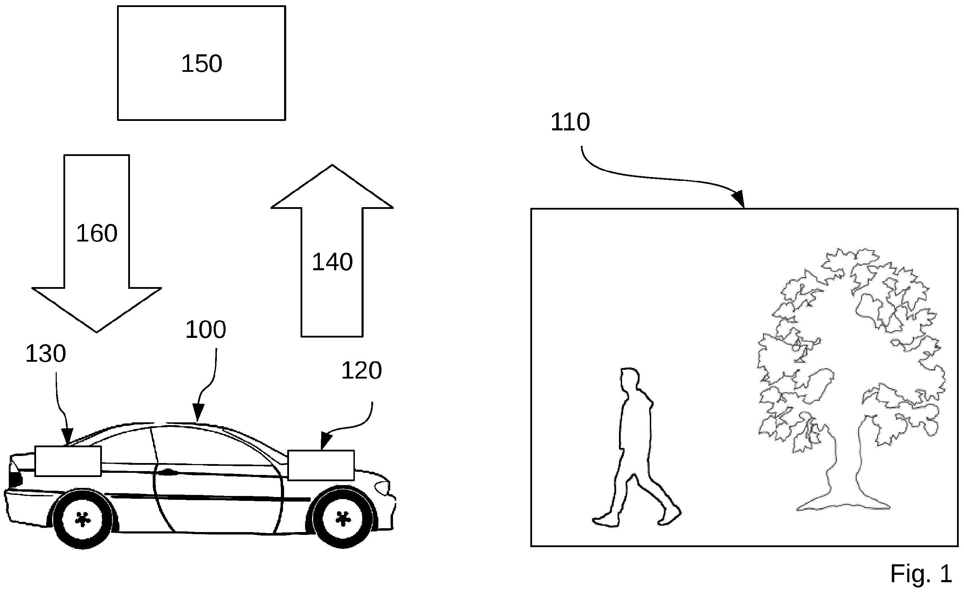

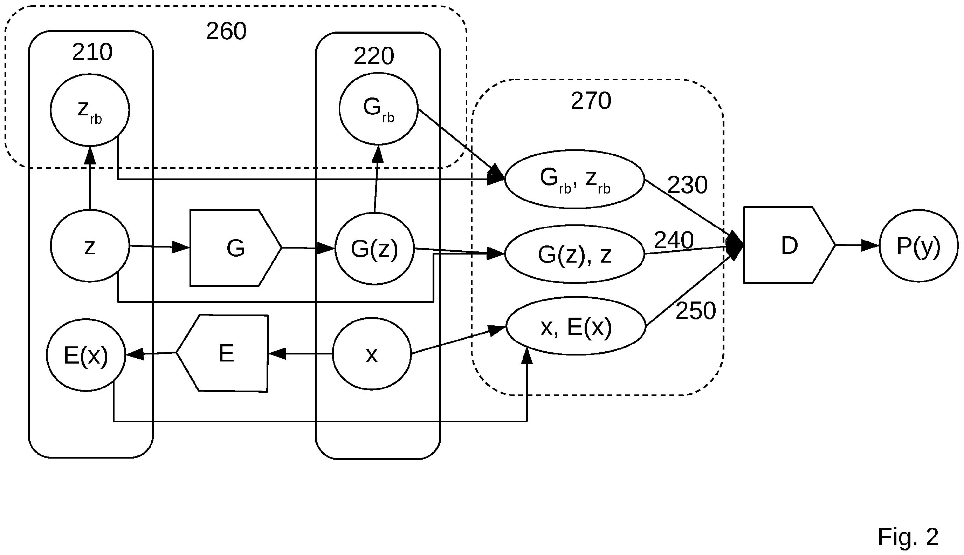

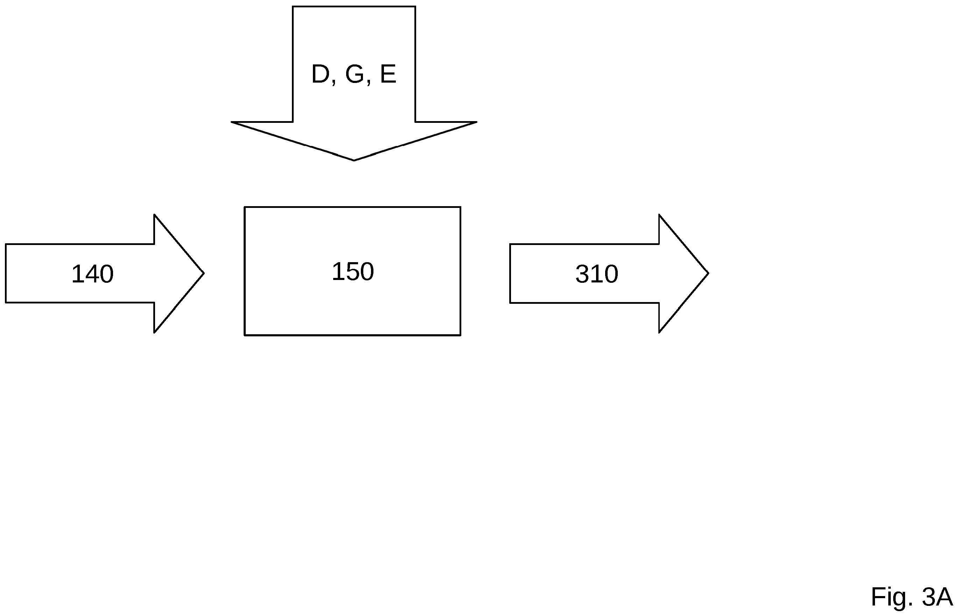

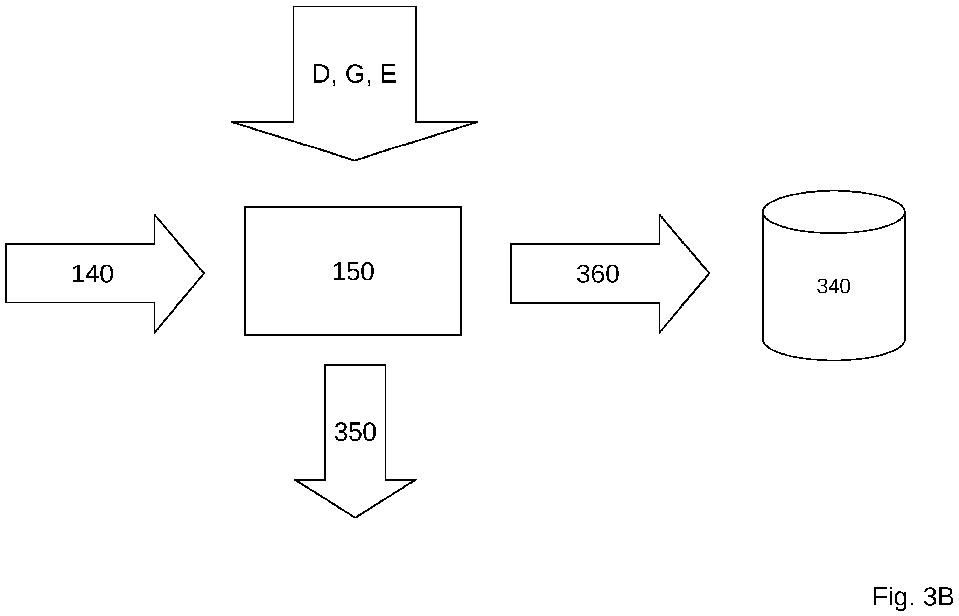

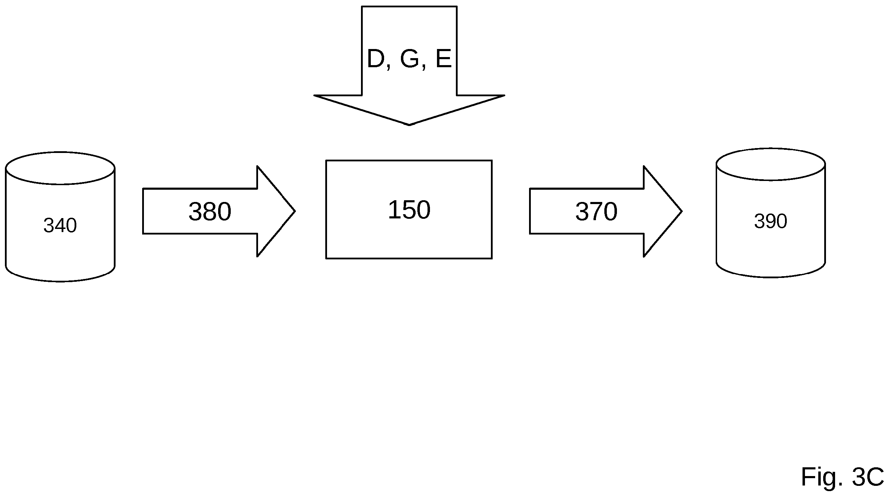

As described above, the invention include calibration steps and detection steps. Calibration (or training) is depicted in Fig. 2. Detection (or inference) is primarily depicted in Figs. 1 and 3.

Fig. 1 depicts a vehicle 100 comprising sensors 120 generating signals 140 indicating current vehicle scenario 110. The signals 140 are input to an evaluation machine 150 generating signal 160 indicating anomalous scenario. Controller 130 processes signal 160 indicating anomalous scenario. The controller alerts, in response to signal 160, the driver and/or passenger of anomalous scenario. The controller may also put the vehicle in a "safe mode" that may include reducing the speed of the vehicle 100, or parking the vehicle in a controlled manner. Although depicted as outside the vehicle 100, the evaluation machine 150 is part of the vehicle. The sensors 120 may be part of the vehicle 100, or outside the vehicle 100. The signals 140 may also come from other sources, such as information from third party regarding traffic conditions or navigation assistance. The evaluation machine 150 determines to generate the signal 160 indicating anomalous scenario when an anomaly score is above a pre-set threshold. The anomaly score is generated from an output signal of the encoder network E, an output signal of the generator network G, and/or an output signal of the discriminator network D.

Fig. 2 depicts a structure of the evaluation machine during calibration of the discriminator D, generator G, and encoder E. The training procedure for G and E includes calibrating their parameters to maximising the probability of D making a mistake. In a fully trained system, the output of G resembles the training data x, and the output of E resembles the corresponding feature set z, and the discriminator D is not able to distinguish between input data in a first category 250 (including sensor signals x and output signal E(x) of the encoder network with inputs of the sensor signals x), and a second category 240 (including generator output G(z) and noise signals z).

Whereas generator G transforms (maps) noise signals from the feature space 210 into signal space 220 corresponding to signals from the vehicle sensors 120, encoder network E transforms (maps) signals in signal space into signals in the feature space 210. In a fully trained system, encoder E generated the inverse of generator G for normal training scenarios. Discriminator network D may down-sample input signals into probability estimates. Generator network G may up-sample noise vectors into estimates of signal data. Encoder E may down-sample input signals into feature signals.

Fig. 2 also depicts a replay buffer 260. Noise signals z and output of generator network G(z) are stored in the replay buffer 260. Replay buffer 260 is used to provide previous generator output signals $G_{rb}$ and previous noise signals

$z_{rb}$. Previous signals 230 may be used to improve the calibration of discriminator network D, and prevent that discriminator D is over-fitted to current input and hence less apt for evaluating anomalous scenarios. Training batch 270 comprises input signals to discriminator network D for calibrating it.

The training of the networks may be done by determining stochastic gradient (decent or ascent) of the networks loss value (value function or objective) over the training batch 270. The parameters of the discriminator network may be calibrated to increase the networks loss value and the parameters of the generator and encoder networks may be calibrated to decrease the networks loss value.

Anomaly detection of sensor signals have multiple application in automotive industry. Figs. 3A to 3C shows examples of application of the invention.

Fig. 3A depicts the evaluation machine 150 used to generate a signal indicating anomalous scenario 310 during vehicle operation. The anomaly score generated by the evaluation machine 150 indicates how well the current scenario has been covered in previous drives, which have been used for the training of models for autonomous control of the vehicle. If the similar scenario coverage is very low, or not covered at all, the scenario should be classified as anomalous. The more scenarios of similar kinds have been used for training vehicle control models, the better the models may handle them. Hence, the classification into normal and anomalous scenarios may indicate how well driving models (and the vehicle) handle the given situation. During closed-loop operation, i.e. driving without human intervention, if the estimated ability is too low (i.e. the anomaly score is above a pre-set threshold) the signal might indicate that the vehicle may not be confident in its ability to handle the given situation in a safe manner.

The vehicle may request the driver to take over control of the vehicle. The signal may indicate to the driver that additional precaution is needed, such as that driver's hands are put on the steering wheel and the driver has readiness to brake. The signal may indicate with reducing speed, vibrating steering wheel and/or drifting steering towards the side of the road that additional attention is needed. The vehicle may have sensors for assessing that driver is alert, such as sensor indicating that driver's hands are on the steering wheel, and may enter a safe mode, such as including stopping the vehicle in a controlled manner, such as on the roadside, unless signals indicate that driver is satisfactory controlling the vehicle.

Fig. 3B depicts the evaluation machine 150 used to filtering vehicle controller training data. Professional drivers operating a vehicle to collect training data for autonomous vehicles to follow (expert data), it may happen that some of the training data is not satisfyingly cautious. The driver may not have been observant during the particular driving session or performed a rough manoeuvre that should not be imitated by the vehicle. The vehicle training scenario data (140) may be input to the evaluation machine 150. Scenario data associated with the signal indicating anomalous scenario 350 acquired may be filtered training data, where anomalous scenario may indicate irregular driver behaviour. Scenario data not associated with the signal indicating anomalous scenario 360 may be stored in a storage 340 for vehicle training.

Fig. 3C depicts the evaluation machine 150 used to reducing a storage volume of a long time storage 390 of vehicle training data. Non-redundant data, i.e. data that gives additional information of value compared to already stored training data, may be indicated by the evaluation machine as anomalous. In this case, only training data indicating anomalous scenarios 370 are by stored 390 for future training sessions.

In this case, the pre-defined threshold for the classification of a scenario as an anomaly may be adjusted such that a fraction, such as the top 5% of all collected data (highest anomaly scores) is stored.

Reference numerals:

| | |
|---|---|
| 100 | Vehicle |
| 110 | Environment |
| 120 | Sensors |
| 130 | Controller |
| 140 | Sensors signals |
| 150 | Evaluation machine |
| 160 | Signal indicating anomalous scenario |
| 210 | Feature space |
| 220 | Data space |
| 230 | Replay buffer feature set and generator (decoder) generated data |
| 240 | Feature set and generator (decoder) generated data (latest generator) |
| 250 | "Real" data and encoder generated feature set |
| 260 | Replay buffer |
| 270 | Batch of training data for networks calibration |
| 310 | Driver alert and/or request for driver takeover |

340    Storage

350    "Irregular" driver behaviour, filtered from training scenarios

360    Appropriate driver behaviour, used for algorithm training scenarios

370    Sensor data related to anomalous situation (storing for future training)

380    Data representing training scenarios

390    Long term storage

D    Discriminator

G    Generator

E    Encoder

z    Noise signal from random noise generator

$z_{rb}$    Noise signal from previous iterations stored in replay buffer

G(z)    Output signal of generator network with noise signals input signal

$G_{rb}$    Generator network output signal from previous iterations stored in replay buffer

x    Data sample from vehicle sensors

E(x)    Output signal of encoder network with data samples input signal

P(y)    Probability of input data being in certain category

**Claims**

1. Method for detecting and acting upon detection of an anomalous vehicle scenario executed by a vehicle (100) which includes:

   i) an evaluation machine (150) comprising a discriminator network (D), a generator network (G), and an encoder network (E), and
   ii) a controller (130),

   the method comprising training steps executed by the evaluation machine (150):

   a) storing noise signals and output signals of the generator network (G) in a replay buffer (260);
   b) receiving previous generator output signals (Grb ) and previous noise signals (Zrb ) from the replay buffer (260);
   c) updating the discriminator network (D), the encoder network (E), and the generator network (G), such that the output signal of the discriminator network (D) indicates a confidence of the discriminator network (D) to categorize a first category of signals comprising sensor signals from vehicle sensors (120) and output signals of the encoder network (E), and a second category of signals comprising noise signals and output signals of the generator network (G), using:

   - training signals (x) from vehicle sensors (120) of the vehicle (100) and output signals of the encoder network (E);
   - the previous generator output signals (Grb ) and the previous noise signals (Zrb );
   - noise signals (z) and an output signals of the generator network (G); the method further comprising detection steps executed by the evaluation machine (150):

   d) generating an anomaly score, indicating how well a current scenario has been covered in previous drives, which have been used for the training of the models for autonomous control of the vehicle, from an output signal of the encoder network (E), an output signal of the generator network (G), and/or an output signal of the discriminator network (D), wherein an input signal to the encoder network (E) includes data from vehicle sensors (120); wherein generating the anomaly score includes generating a reconstruction loss value and generating a discriminator score value and wherein the reconstruction loss value and the discriminator score value are linearly weighted into the anomaly score;
   e) comparing the anomaly score with a pre-set threshold; and
   f) generating a signal (160) indicating the anomalous scenario depending on the comparison, if the anomaly score is above the pre-set threshold; the method further comprising action steps executed by the controller (130) of the vehicle (100):
   g) generating a request for driver take-over (310) of the vehicle (100) during closed-loop operation in the case of indication of anomalous scenario; wherein the request for driver take-over indicates to the driver that additional precaution is needed, such as that driver's hands are put on the steering wheel and the driver has readiness to brake, by reducing speed, vibrating steering wheel and/or drifting steering towards the side of the road to indicate that additional attention is needed.

2. The method of claim 1,

   wherein the method comprises iterating through steps a) to c) a plurality of times,
   wherein the discriminator network, generator network and the encoder network are preferably updated within each iteration.

3. The method of the claims 1 or 2,
   wherein the output signal of the discriminator network (D) indicates a confidence of the discriminator network (D) to categorize:

   - a first category of signals (250) comprising sensor signals from vehicle sensors (120) and output signals of the encoder network (E); and
   - a second category of signals (240) comprising noise signals and output signals of the generator network (G).

4. The method of claim 3,

   wherein step c) includes affecting a networks loss value in a first direction by calibrating the discriminator network (D) to increase the confidence; and
   wherein step c) includes affecting the networks loss value in a second direction by calibrating the encoder network (E) and the generator network (G) to decrease the confidence.

5. The method of any of the preceding claims,
   wherein the ratio between previous generator output signals ($G_{rb}$) and output signals of the generator network (G) during step c) is between 1:4 and 4:1, preferably between 1:2 and 2:1, or more preferably between 4:5 and 5:4.

6. The method of any of the preceding claims,
   wherein the discriminator network, the generator network, and/or the encoder network is a convolutional neural network, and wherein the input to the convolutional neural network is preferably a signal containing information of scenarios in two dimensions, more preferably a signal containing image data.

7. The method of any of the preceding claims,
   wherein the method further comprises:

   - updating a controller (130) of a vehicle (100) in response to the signal (160) indicating anomalous scenario.

8. Vehicle (100) or system with a vehicle (100), comprising:

   - an evaluation machine (150) with a discriminator network (D), a generator network (G), and an encoder network (E) adapted to execute to the calibration steps and detection steps of claims 1 to 7;
   - a controller (130) adapted to execute the action steps of claims 1-7.

9. Computer readable storage medium containing instructions which, when executed by at least one processor in the vehicle (100) of claim 8, cause the vehicle (100) to carry out the steps of the method of one of the claims 1 to 7.


**Patentansprüche**

1. Verfahren zum Detektieren eines von einem Fahrzeug (100) vollführten anomalen Fahrzeugszenarios und zum Eingreifen bei einer solchen Detektion, wobei das Fahrzeug Folgendes umfasst:

   i) eine Bewertungsmaschine (150), die ein Diskriminatornetz (D), ein Generatornetz (G) und ein Codierernetz (E) enthält, und
   ii) eine Steuereinheit (130),

   wobei das Verfahren die folgenden Trainingsschritte umfasst, die von der Bewertungsmaschine (150) ausgeführt werden:

a) Speichern von Rauschsignalen und von Ausgangssignalen des Generatornetzes (G) in einem Wiedergabepuffer (260);

b) Empfangen früherer Generatorausgangssignale (Grb) und früherer Rauschsignale (Zrb) von dem Wiedergabepuffer (260);

c) Aktualisieren des Diskriminatornetzes (D), des Codierernetzes (E) und des Generatornetzes (G), derart, dass das Ausgangssignal des Diskriminatornetzes (D) ein Vertrauen des Diskriminatornetzes (D) angibt, um eine erste Kategorie von Signalen, die Sensorsignale von Fahrzeugsensoren (120) und Ausgangssignale des Codierernetzes (E) umfassen, und eine zweite Kategorie von Signalen, die Rauschsignale und Ausgangssignale des Generatornetzes (G) umfassen, zu kategorisieren unter Verwendung:

- von Trainingssignalen (x) von Fahrzeugsensoren (120) des Fahrzeugs (100) und von Ausgangssignalen des Codierernetzes (E);
- der früheren Generatorausgangssignale (Grb) und der früheren Rauschsignale (Zrb); und
- von Rauschsignalen (z) und von Ausgangssignalen des Generatornetzes (G); wobei das Verfahren ferner die folgenden Detektionsschritte umfasst, die von der Bewertungsmaschine (150) ausgeführt werden:

d) Erzeugen einer Anomaliebewertung, die angibt, wie gut ein aktuelles Szenario in früheren Fahrten abgedeckt worden ist, die verwendet worden sind, um die Modelle für eine autonome Steuerung des Fahrzeugs zu trainieren, aus einem Ausgangssignal des Codierernetzes (E), einem Ausgangssignal des Generatornetzes (G) und/oder einem Ausgangssignal des Diskriminatornetzes (D), wobei ein Eingangssignal in das Codierernetz (E) Daten von Fahrzeugsensoren (120) enthält; wobei das Erzeugen der Anomaliebewertung das Erzeugen eines Rekonstruktionsverlustwertes und das Erzeugen eines Diskriminatorbewertungswertes enthält und wobei der Rekonstruktionsverlustwert und der Diskriminatorbewertungswert zu der Anomaliebewertung linear gewichtet werden;

e) Vergleichen der Anomaliebewertung mit einem im Voraus eingestellten Schwellenwert; und

f) Erzeugen eines Signals (160), das das anomale Szenario in Abhängigkeit von dem Vergleich angibt, falls die Anomaliebewertung über dem im Voraus eingestellten Schwellenwert liegt; wobei das Verfahren ferner die folgenden Eingriffschritte umfasst, die von der Steuereinheit (130) des Fahrzeugs (100) ausgeführt werden:

g) Erzeugen einer Anforderung einer Übernahme (310) des Fahrzeugs (100) durch den Fahrer während einer Operation in geschlossener Schleife im Fall der Angabe eines anomalen Szenarios; wobei die Anforderungen einer Übernahme durch den Fahrer dem Fahrer anzeigt, dass eine zusätzliche Vorsichtsmaßnahme erforderlich ist, etwa dass die Hände des Fahrers auf das Lenkrad gelegt werden und der Fahrer in Bremsbereitschaft ist, indem die Geschwindigkeit verringert wird, das Lenkrad in Vibration versetzt wird und/oder ein Lenken zur Seite der Straße bewirkt wird, um anzugeben, dass zusätzliche Aufmerksamkeit erforderlich ist.

**2.** Verfahren nach Anspruch 1,

wobei das Verfahren das mehrmalige Iterieren durch die Schritte a) bis c) umfasst,
wobei das Diskriminatornetz, das Generatornetz und das Codierernetz vorzugsweise in jeder Iteration aktualisiert werden.

**3.** Verfahren nach Anspruch 1 oder 2,

wobei das Ausgangssignal des Diskriminatornetzes (D) ein Vertrauen des Diskriminatornetzes (D) angibt, um Folgendes zu kategorisieren:

- eine erste Kategorie von Signalen (250), die Sensorsignale von Fahrzeugsensoren (120) und Ausgangssignale des Codierernetzes (E) umfasst; und
- eine zweite Kategorie von Signalen (240), die Rauschsignale und Ausgangssignale des Generatornetzes (G) umfasst.

**4.** Verfahren nach Anspruch 3,

wobei der Schritt c) das Beeinflussen eines Netzverlustwertes in einer ersten Richtung durch Kalibrieren des Diskriminatornetzes (D), um das Vertrauen zu erhöhen, umfasst; und
wobei der Schritt c) das Beeinflussen des Netzverlustwertes in einer zweiten Richtung durch Kalibrieren des Codierernetzes (E) und des Generatornetzes (G), um das Vertrauen zu senken, umfasst.

**5.** Verfahren nach einem vorhergehenden Anspruch,
wobei das Verhältnis zwischen früheren Generatorausgangssignalen ($G_{rb}$) und Ausgangssignalen des Generatornetzes (G) während des Schrittes c) zwischen 1:4 und 4:1 und vorzugsweise zwischen 1:2 und 2:1 und stärker bevorzugt zwischen 4:5 und 5:4 liegt.

**6.** Verfahren nach einem der vorhergehenden Ansprüche,
wobei das Diskriminatornetz, das Generatornetz und/oder das Codierernetz ein neuronales Faltungsnetz sind und wobei die Eingabe in das neuronale Faltungsnetz vorzugsweise ein Signal, das Informationen von Szenarios in zwei Dimensionen, und stärker bevorzugt ein Signal, das Bilddaten enthält, ist.

**7.** Verfahren nach einem der vorhergehenden Ansprüche,
wobei das Verfahren ferner Folgendes umfasst:

- Aktualisieren einer Steuereinheit (130) des Fahrzeugs (100) in Reaktion darauf, dass das Signal (160) ein anomales Szenario angibt.

**8.** Fahrzeug (100) oder System mit einem Fahrzeug (100), das Folgendes umfasst:

- eine Bewertungsmaschine (150) mit einem Diskriminatornetz (D), einem Generatornetz (G) und einem Codierernetz (E), die dafür ausgelegt sind, die Kalibrierungsschritte und Detektionsschritte der Ansprüche 1 bis 7 auszuführen;
- eine Steuereinheit (130), die dafür ausgelegt ist, die Eingriffschritte der Ansprüche 1-7 auszuführen.

**9.** Computerlesbares Speichermedium, das Anweisungen enthält, die dann, wenn sie durch wenigstens einen Prozessor in dem Fahrzeug (100) nach Anspruch 8 ausgeführt werden, das Fahrzeug (100) dazu veranlassen, die Schritte des Verfahrens nach einem der Ansprüche 1 bis 7 auszuführen.

## Revendications

**1.** Procédé pour détecter et réagir à la détection d'un scénario de véhicule anormal exécuté par un véhicule (100) qui inclut :

i) une machine d'évaluation (150) comprenant un réseau discriminatif (D), un réseau génératif (G), et un réseau de codage (E), et
ii) un dispositif de commande (130),

le procédé comprenant des étapes d'entraînement exécutées par la machine d'évaluation (150) :

a) le stockage de signaux de bruit et de signaux de sortie du réseau génératif (G) dans une mémoire tampon de relecture (260) ;
b) la réception de signaux de sortie génératifs précédents ($G_{rb}$) et de signaux de bruit précédents ($Z_{rb}$) provenant de la mémoire tampon de relecture (260) ;
c) la mise à jour du réseau discriminatif (D), du réseau de codage (E), et du réseau génératif (G), de telle sorte que le signal de sortie du réseau discriminatif (D) indique une confiance du réseau discriminatif (D) pour catégoriser une première catégorie de signaux comprenant des signaux de capteur provenant de capteurs de véhicule (120) et des signaux de sortie du réseau de codage (E), et une seconde catégorie de signaux comprenant des signaux de bruit et des signaux de sortie du réseau génératif (G), utilisant :

- des signaux d'entraînement (x) provenant de capteurs de véhicule (120) du véhicule (100) et des signaux de sortie du réseau de codage (E) ;
- les signaux de sortie génératifs précédents ($G_{rb}$) et les signaux de bruit précédents ($Z_{rb}$) ;
- des signaux de bruit (z) et des signaux de sortie du réseau génératif (G) ; le procédé comprenant en outre des étapes de détection exécutées par la machine d'évaluation (150) :

d) la génération d'un score d'anomalie, indiquant dans quelle mesure un scénario actuel a été couvert dans des conduites précédentes, qui ont été utilisées pour l'entraînement des modèles pour la commande autonome du véhicule, à partir d'un signal de sortie du réseau de codage (E), d'un signal de sortie du réseau génératif (G), et/ou d'un signal de sortie du réseau discriminatif (D), dans lequel un signal d'entrée dans le réseau de codage (E) inclut des données provenant de capteurs de véhicule (120) ; dans lequel la génération du score d'anomalie inclut la génération d'une valeur de perte de reconstruction et la génération d'une valeur de score discriminatif et dans lequel la valeur de perte de reconstruction et la valeur de score discriminatif sont pondérées de manière linéaire pour former le score d'anomalie ;

e) la comparaison du score d'anomalie avec un seuil prédéfini ; et

f) la génération d'un signal (160) indiquant le scénario anormal en fonction de la comparaison, si le score d'anomalie est supérieur au seuil prédéfini ; le procédé comprenant en outre des étapes d'action exécutées par le dispositif de commande (130) du véhicule (100) :

g) la génération d'une demande de reprise conducteur (310) du véhicule (100) pendant une opération en boucle fermée dans le cas d'une indication de scénario anormal ; dans lequel la demande de reprise conducteur indique au conducteur qu'une attention supplémentaire est nécessaire, comme le fait que les mains du conducteur soient placées sur le volant et que le conducteur soit prêt à freiner, en réduisant la vitesse, en faisant vibrer le volant et/ou en faisant dériver la direction vers le côté de la route pour indiquer qu'une attention supplémentaire est nécessaire.

2. Procédé selon la revendication 1,

dans lequel le procédé comprend l'itération des étapes a) à c) une pluralité de fois,

dans lequel le réseau discriminatif, le réseau génératif et le réseau de codage sont de préférence mis à jour à chaque itération.

3. Procédé selon les revendications 1 ou 2,
dans lequel le signal de sortie du réseau discriminatif (D) indique une confiance du réseau discriminatif (D) pour catégoriser :

- une première catégorie de signaux (250) comprenant des signaux de capteur provenant de capteurs de véhicule (120) et des signaux de sortie du réseau de codage (E) ; et
- une seconde catégorie de signaux (240) comprenant des signaux de bruit et des signaux de sortie du réseau génératif (G).

4. Procédé selon la revendication 3,

dans lequel l'étape c) inclut l'affectation d'une valeur de perte de réseau dans une première direction en étalonnant le réseau discriminatif (D) pour augmenter la confiance ; et

dans lequel l'étape c) inclut l'affectation de la valeur de perte de réseau dans une seconde direction en étalonnant le réseau de codage (E) et le réseau génératif (G) pour diminuer la confiance.

5. Procédé selon l'une quelconque des revendications précédentes,
dans lequel le rapport entre des signaux de sortie génératifs précédents ($G_{rb}$) et des signaux de sortie du réseau génératif (G) pendant l'étape c) est compris entre 1:4 et 4:1, de préférence entre 1:2 et 2:1, ou plus préférablement entre 4:5 et 5:4.

6. Procédé selon l'une quelconque des revendications précédentes,
dans lequel le réseau discriminatif, le réseau génératif, et/ou le réseau de codage est un réseau neuronal convolutif, et dans lequel l'entrée dans le réseau neuronal convolutif est de préférence un signal contenant des informations de scénarios dans deux dimensions, plus préférablement un signal contenant des données d'image.

7. Procédé selon l'une quelconque des revendications précédentes,
dans lequel le procédé comprend en outre :

- la mise à jour d'un dispositif de commande (130) d'un véhicule (100) en réponse au signal (160) indiquant un scénario anormal.

8. Véhicule (100) ou système avec un véhicule (100), comprenant :

- une machine d'évaluation (150) avec un réseau discriminatif (D), un réseau génératif (G), et un réseau de codage (E) adaptée pour exécuter les étapes d'étalonnage et les étapes de détection selon les revendications 1 à 7 ;
- un dispositif de commande (130) adapté pour exécuter les étapes d'action selon les revendications 1 à 7.

9. Support de stockage lisible par ordinateur contenant des instructions qui, lorsqu'elles sont exécutées par au moins un processeur dans le véhicule (100) selon la revendication 8, amènent le véhicule (100) à effectuer les étapes du procédé selon l'une des revendications 1 à 7.

Fig. 1

110

150

140

160

100

120

130

Fig. 2

EP 3 654 246 B1

Fig. 3A

D, G, E

140 → 150 → 360 → 340

350

Fig. 3B

D, G, E

150

370

390

380

340

Fig. 3C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160272113 A1

**Non-patent literature cited in the description**

- **FAHRETTIN GÖKGÖZ et al.** *Anomaly Detection using GANs in OpenSky Network,* May 2015